# EUROPEAN PATENT APPLICATION

(11) **EP 4 354 262 A1**
(43) Date of publication of application: **17.04.2024**
(21) Application number: 23202237.6
(22) Date of filing: 06.10.2023
(51) Int. Cl.: G06F 3/01, G06V 20/20

(54) **PRE-SCANNING AND INDEXING NEARBY OBJECTS DURING LOAD**

(30) Priority: 11.10.2022 US 202217963961
(71) Applicant: Meta Platforms Technologies, LLC, Menlo Park, CA 94025 (US)
(72) Inventor: WILLIAMS, Nicole Jasmin, Menlo Park (US); ARUNACHALA, Amrutha Hakkare, Menlo Park (US); SEKAR, Sabaritha Shilpa, Menlo Park (US)
(74) Representative: Murgitroyd & Company

(57) **Abstract**

Methods, systems, and storage media for scanning and indexing are disclosed. Exemplary implementations may: power on a headset; in response to the powering on, initiate a scan of an area; receive a request to include and/or exclude objects in the area from being scanned; associate scanned objects with a weight; and render the scanned objects through the headset.

## Description

### TECHNICAL FIELD

The present disclosure generally relates to scanning and indexing, and more particularly to pre-scanning and indexing nearby objects during load of an artificial reality device (e.g., a head-mounted display (HMD)).

### BACKGROUND

Conventionally, artificial reality, extended reality, or extra reality (collectively "XR") is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality.

### BRIEF SUMMARY

The subject disclosure provides for systems and methods for scanning and indexing. A user is allowed to import real-world objects into an artificial reality environment without having to prioritize objects in their environment or endure long processing periods. For example, when the user powers on their artificial reality headset, they may be prompted to pre-scan their location or the room they are in for objects to be imported into the artificial reality environment based on importance to the user and/or artificial reality experience (or other metrics).

One aspect of the present disclosure relates to a method for scanning and indexing. The method may include powering on a headset. The method may include, in response to the powering on, initiating a scan of an area. The method may include receiving a request to include and/or exclude objects in the area from being scanned. The method may include associating scanned objects with a weight. The method may include rendering the scanned objects through the headset. The method may be computer-implemented.

In some embodiments of the method, the area comprises a room or location.

In some embodiments, the method further comprises indexing the scanned objects by the weight.

In some embodiments, the method further comprises importing objects from a store.

In some embodiments, obtaining the scanned objects comprises a reverse-image search to identify an object.

In some embodiments, the method further comprises receiving input regarding an object to be located and scanned in the area.

In some embodiments, the method further comprises providing a prompt to a user to pick up and scan an object that is frequently used.

In some embodiments, the method further comprises associating each scanned object with a non-fungible token identity.

In some embodiments, the headset includes a head-mounted display configured to provide artificial reality experiences.

In some embodiments, the area includes an environment proximate to the headset.

Another aspect of the present disclosure relates to a system configured for scanning and indexing. The system may include one or more hardware processors configured by machine-readable instructions. The processor(s) may be configured to cause the system to perform the method of the first aspect. The processor(s) may be configured to power on a headset. The processor(s) may be configured to, in response to the powering on, initiate a scan of an area. The area may include a room or location. The processor(s) may be configured to provide a prompt to a user to pick up and scan an object that is frequently used. The processor(s) may be configured to associate the scanned object with a non-fungible token identity. The processor(s) may be configured to render the scanned objects through the headset.

In some embodiments, the non-fungible token identity includes identification information stored in a blockchain.

In some embodiments, providing the prompt to the user includes presenting the prompt for viewing and/or listening through the headset.

In some embodiments, the one or more hardware processors are further configured by machine-readable instructions to perform one or more further steps of the method of the first aspect.

In some embodiments, the one or more hardware processors are further configured by machine-readable instructions to import objects from a store.

In some embodiments, obtaining the scanned objects comprises a reverse-image search to identify an object.

In some embodiments, the one or more hardware processors are further configured by machine-readable instructions to receive input regarding an object to be located and scanned in the area.

In some embodiments, the one or more hardware processors are further configured by machine-readable instructions to provide a prompt to a user to pick up and scan an object that is frequently used.

In some embodiments, the object that is frequently used includes one or more of a real-world object that has been observed in regular use, a real-world object for which a user has indicated frequent use, or a real-world object that is a type of object that is predetermined to have frequent use.

In some embodiments, the headset includes a head-mounted display configured to provide artificial reality experiences, and wherein the area includes an environment proximate to the headset.

Yet another aspect of the present disclosure relates to a non-transient computer-readable storage medium having instructions embodied thereon, the instructions being executable by one or more processors to perform a method for scanning and indexing. The method may comprise the method of the first aspect. The method may include powering on a headset. The method may include, in response to the powering on, initiating a scan of an area. The area may include an environment proximate to the headset. The method may include receiving a request to include and/or exclude objects in the area from being scanned. The method may include associating scanned objects with a weight. The method may include indexing the scanned objects by the weight. The method may include importing virtual representations of the scanned objects from a store based on the indexing. The method may include rendering the scanned objects through the headset. Rendering the scanned objects through the headset may include providing visual representations of the scanned objects that are viewable via the headset.

Still another aspect of the present disclosure relates to a system configured for scanning and indexing. The method may include means to perform the method of the first aspect. The system may include means for powering on a headset. The system may include means for, in response to the powering on, initiating a scan of an area. The system may include means for receiving a request to include and/or exclude objects in the area from being scanned. The system may include means for associating scanned objects with a weight. The system may include means for rendering the scanned objects through the headset.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a block diagram illustrating an overview of devices on which some implementations of the disclosed technology can operate.
FIG. 2A is a wire diagram of a virtual reality head-mounted display (HMD), in accordance with one or more implementations.
FIG. 2B is a wire diagram of a mixed reality HMD system which includes a mixed reality HMD and a core processing component, in accordance with one or more implementations.
FIG. 3 illustrates a space in which objects can be scanned and/or indexed, in accordance with one or more implementations.
FIG. 4 illustrates a system configured for scanning and indexing, in accordance with one or more implementations.
FIG. 5 illustrates an example flow diagram for scanning and indexing, according to certain aspects of the disclosure.
FIG. 6 is a block diagram illustrating an example computer system (e.g., representing both client and server) with which aspects of the subject technology can be implemented.

In one or more implementations, not all of the depicted components in each figure may be required, and one or more implementations may include additional components not shown in a figure. Variations in the arrangement and type of the components may be made without departing from the scope of the subject disclosure. Additional components, different components, or fewer components may be utilized within the scope of the subject disclosure.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

Real-world objects may be represented in an artificial reality environment as virtual objects with an appearance similar to the real-world counterparts. Producing a given virtual object representing a given real-world object may involve a computationally expensive process that prevents real-time rendering of the given real-world object in the artificial reality environment.

The subject disclosure provides for systems and methods for scanning and indexing. A user is allowed to import real-world objects into an artificial reality environment without having to prioritize objects in their environment or endure long processing periods. For example, when the user powers on their artificial reality headset, they may be prompted to pre-scan their location or the room they are in for objects to be imported into the artificial reality environment based on importance to the user and/or artificial reality experience (or other metrics).

Implementations described herein address the aforementioned shortcomings and other shortcomings by providing pre-scanning and indexing of nearby objects during loading of an artificial reality headset. For example, in some implementations, responsive to the headset being turned on, a user may receive a prompt to scan their surroundings using the headset. Objects in the user's real-world environment may be scanned. The scanned objects may be identified and/or indexed, e.g., based on importance in the artificial reality environment. Only important objects may be displayed in the artificial reality environment. In some implementations, predetermined virtual objects may be obtained in response to scanning the real-world objects.

Embodiments of the disclosed technology may include or be implemented in conjunction with an artificial reality system. Artificial reality, extended reality, or extra reality (collectively "XR") is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, an MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

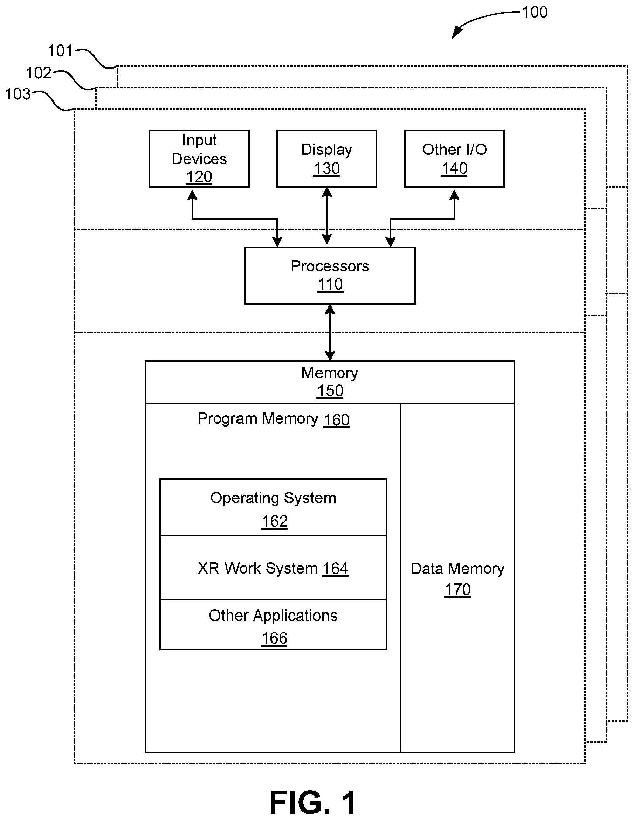

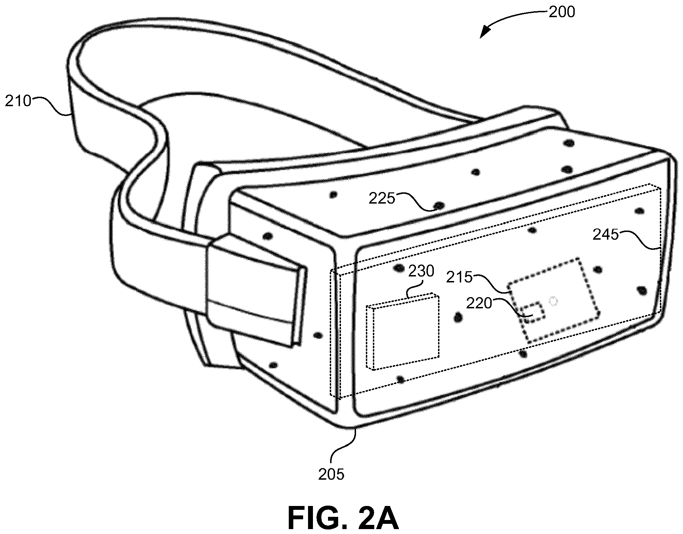

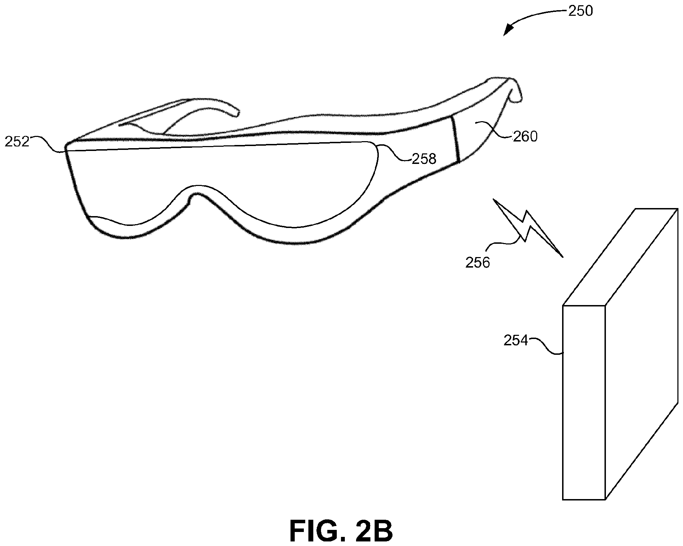

Several implementations are discussed below in more detail in reference to the figures. FIG. 1 is a block diagram illustrating an overview of devices on which some implementations of the disclosed technology can operate. The devices can comprise hardware components of a computing system 100 that can create, administer, and provide interaction modes for an artificial reality collaborative working environment. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to FIGS. 2A and 2B. In some implementations, position and environment data can be gathered only by sensors incorporated in the headset device, while in other implementations, one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.). Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across one of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, XR work system 164, and other application programs 166. Memory 150 can also include data memory 170 that can include information to be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

FIG. 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in a virtual environment in three degrees of freedom (3DoF) or six degrees of freedom (6DoF). For example, the locators 225 can emit infrared light beams which create light points on real objects around the HMD 200. As another example, the IMU 215 can include, e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

FIG. 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

Exemplary implementations may seamlessly import real-world objects into artificial reality applications and/or artificial reality environments. In some implementations, when a user turns their headset on (e.g., for the first time that day), they may receive a prompt requesting that they scan their room at the outset of their artificial reality experience. Real-world objects captured during the scan may be imported into the artificial reality environment later when the user wants or needs them. Some embodiments may help relieve power constraints on the headset.

Objects may be prioritized for and/or blocked from import into the artificial reality environment. Some implementations may allow users to identify objects (e.g., at the time of the scan) to include or exclude from eventual import into the artificial reality environment. Some implementations may determine weights for individual real-world objects in the user's vicinity based on importance (e.g., to the user and/or to the artificial reality experience) or other metric, and import into the artificial reality environment only those objects with an importance that breaches a pre-determined threshold. Some implementations may be geo-location specific. For example, in some implementations, if a user is in someone else's home, the user may not be prompted to and/or able scan rooms in that house.

In some implementations, through their artificial reality headset, the user may perform an initial scan of everything in their house, which, once scanned, would be indexed. Real-world objects captured in the scan may then be imported even when not in the user's real-world vicinity. Some implementations may provide an online or virtual store of objects that can be imported into the user's artificial reality environment. For example, if a user wanted to import a desk mouse, instead of scanning the one the user has at home, the user could go into a virtual store and pick any virtual mouse the user wanted.

In some implementations, the burden of scanning falls on each individual user to scan their surroundings/objects. In some implementations, scans are performed in the background during normal use of the artificial reality headset.

According to some implementations, for a real-world object scanned by the headset, a reverse-image search may be performed to identify the object. One or more attributes of the object may be determined and stored (e.g., in an online profile of the user). Examples of object attributes may include one or more of physical dimensions, color(s), patterns, opacity, texture, temperature, and/or other attributes. The attributes of the object may be applied to a virtual representation of the object in the artificial reality environment.

Some implementations may omit the scanning process and directly search for an object, e.g., when a commonness of the object breaches a threshold (e.g., ear buds of a specific brand). A library of common assets (e.g., virtual representations of real-world objects) may facilitate less users having to perform regular scans.

In some implementations, instead of a user scanning a real-world object, the user may enter text or a verbal command of an object they what imported into their artificial reality environment. For example, if the headset received a user command to "find my bottle," the headset may change its camera view to find the bottle in the real-world vicinity and import the bottle into the artificial reality environment. If an object is not clearly visible, a prompt may be presented through the headset saying "There is no bottle in view, but there is an object to the left that looks like a bottle. Move left to confirm." When the desired object enters the view of the headset, the object may be scanned automatically.

The headset may prompt the user to pick up a real-world object with their hands. According to some implementations, for objects that are not stored online (e.g., in a user profile, in a virtual store, etc.), the headset may provide a prompt to the user to pick up the object and rotate the object at different angles so the camera(s) of the headset can capture details on all sides of the object. In some implementations, the headset may only prompt users to pick up and scan an object if the object is identified as a frequently used object (e.g., daily, weekly, monthly, etc.). This may decrease a number of prompts to scan objects that the user does not ever or often need in their artificial reality environment.

In some implementations, the user may point at an object (e.g., using a handheld or worn controller, using a hand gesture, etc.), and then receive, through the headset, an indication of whether that object can be identified as opposed to presuming every object in the user's real-world vicinity will be identified.

Some implementations may provide the user with an option to upload a three-dimensional (3D) model of a scanned object to a shared library. Individual objects (e.g., real-world objects and/or virtual objects) may be associated with a non-fungible token (NFT) identity, which may allow creators to scan in their art/creations to be uniquely tagged as belonging to them.

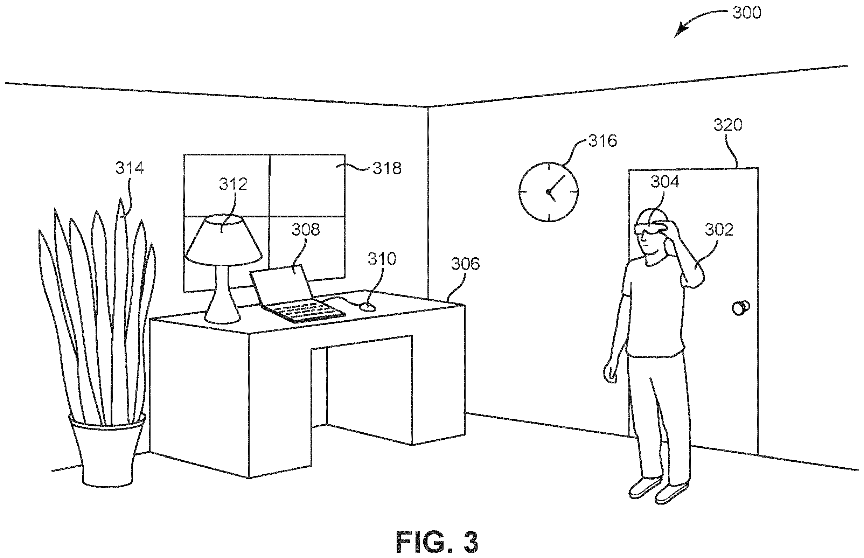

FIG. 3 illustrates a space 300 in which objects can be scanned and/or indexed, in accordance with one or more implementations. The space 300 may include a home office. A user 302 is the space 300 may have just powered up and put on an HMD 304. The user 302 may be prompted to scan the space 300 for different objects. Examples of objects in the space 300 include desk 306, laptop 308, mouse 310, lamp 312, plant 314, clock 316, window 318, door 320, and/or other objects. The user 302 may scan the space 300 by glancing around the space 300 while wearing the HMD 304 to bring different objects into a view of the HMD 304. Images and/or video of various objects (e.g., 306, 308, 310, 312, 314, 316, 318, and/or 320) may be captured by HMD 304 during the scan. The objects may be identified and indexed. Indexing the objects may be based on one or more of an identity of an object, a type of object, an importance of an object to the user, an importance of an object to the user's artificial reality experience, a frequency of use of an object, and/or other information. A virtual representation of one or more of the objects in the space 300 may be imported to an artificial reality environment presented to the user 302 through the HMD 304. Import and/or presentation of a given virtual representation of a real-world object may occur in response to the user 302 wanting or needing (e.g., to complete a game) the given virtual representation. Virtual representations of some of the objects in the space 300 may be excluded from being imported and/or presented in the artificial reality environment presented by the HMD 304. Such exclusion of a given virtual representation may be based on receipt of a user selection, an indexing of the given virtual representation or its real-world counterpart, a parental control setting, and/or other information.

The disclosed system(s) address a problem in traditional scanning and indexing techniques tied to computer technology, namely, the technical problem of importing real-world objects into an artificial reality environment. The disclosed system solves this technical problem by providing a solution also rooted in computer technology, namely, by providing for pre-scanning and indexing nearby objects during load of an artificial reality device (e.g., a head-mounted display (HMD)). The disclosed subject technology further provides improvements to the functioning of the computer itself because it improves processing and efficiency in scanning and indexing.

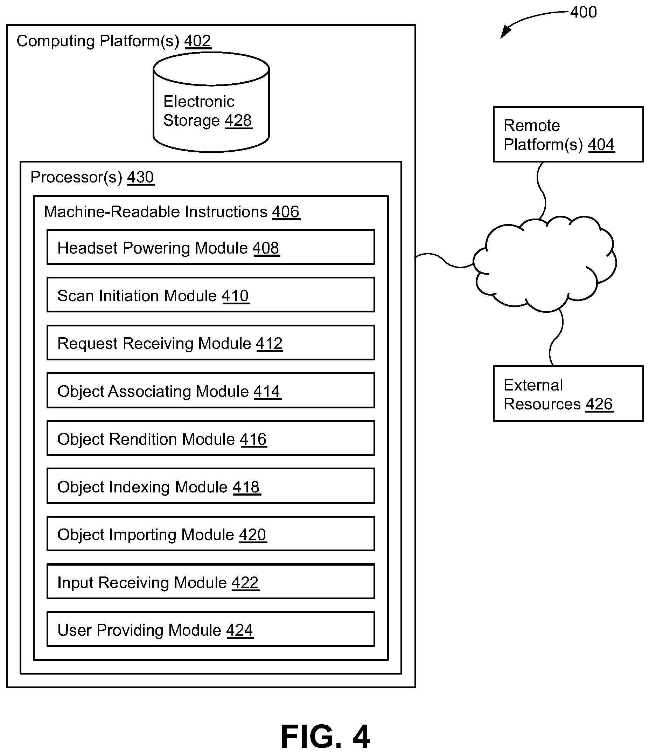

FIG. 4 illustrates a system 400 configured for scanning and indexing, according to certain aspects of the disclosure. In some implementations, system 400 may include one or more computing platforms 402. Computing platform(s) 402 may be configured to communicate with one or more remote platforms 404 according to a client/server architecture, a peer-to-peer architecture, and/or other architectures. Remote platform(s) 404 may be configured to communicate with other remote platforms via computing platform(s) 402 and/or according to a client/server architecture, a peer-to-peer architecture, and/or other architectures. Users may access system 400 via remote platform(s) 404.

Computing platform(s) 402 may be configured by machine-readable instructions 406. Machine-readable instructions 406 may include one or more instruction modules. The instruction modules may include computer program modules. The instruction modules may include one or more of headset powering module 408, scan initiation module 410, request receiving module 412, object associating module 414, object rendition module 416, object indexing module 418, object importing module 420, input receiving module 422, user providing module 424, and/or other instruction modules.

Headset powering module 408 may be configured to power on a headset. The headset may include a head-mounted display configured to provide artificial reality experiences.

Scan initiation module 410 may be configured to, in response to the powering on, initiate a scan of an area. The area may include a room or location. The area may include an environment proximate to the headset. The scan may involve a user wearing the headset and looking through the headset around the area. The scan of the area may include a visual recording of the area. The visual recording may include one or more videos and/or one or more images. Initiating the scan of the area may include automatically beginning the scan. Initiating the scan of the area may include providing a prompt for a user to begin the scan. Initiating the scan of the area may include providing instructions to a user on how to begin and/or perform the scan.

Obtaining the scanned objects may include a reverse-image search to identify an object. The reverse-image search may include a content-based image retrieval query using an image of a scanned object. Identifying the object through the reverse-image search may include obtaining a search result of the reverse-image search and associating the search result with the object. By way of non-limiting example, the identification of the object may include one or more of a user selection of the object, a name of the object, a number associated with the object, or an attribute of the object. By way of non-limiting example, the attribute of the object may include one or more of a color of the object, a size of the object, a material of the object, a user of the object, or a location of the object.

Request receiving module 412 may be configured to receive a request to include and/or exclude objects in the area from being scanned. Receiving the request to include and/or exclude objects in the area from being scanned may include receiving the request through the headset. The request to include and/or exclude objects in the area from being scanned may include one or both of a user-provided request or a predetermined request associated with a given object or a given type of object. Including a given object in the area may include a real-world object located within the area. Including a given object in the area being scanned may include incorporating information associated with the given object in a result of a scan of the area. Excluding a given object in the area from being scanned may include omitting information associated with the given object from a result of a scan of the area. By way of non-limiting example, the result of the scan of the area may include one or more of an index of real-world objects within the area, a database of real-world objects within the area, a visual recording of the area, an artificial reality rendering of a given object within the area, or an artificial rendering of the area.

Object associating module 414 may be configured to associate scanned objects with a weight. The weight of a given scanned object may include an indication of importance in an artificial reality experience. Associating a given scanned object with the weight may include attributing a weight value to the given scanned object and storing the weight value in computerized memory.

Object associating module 414 may be configured to associate each scanned object with a non-fungible token identity. The non-fungible token identity may include identification information stored in a blockchain.

Object rendition module 416 may be configured to render the scanned objects through the headset. Rendering the scanned objects through the headset may include providing visual representations of the scanned objects that are viewable via the headset.

Object indexing module 418 may be configured to index the scanned objects by the weight. Indexing the scanned objects by weight may include storing and/or organizing information associated with the scanned objects based on weight values associated with the scanned objects.

Object importing module 420 may be configured to import objects from a store. The store may include a virtual marketplace where virtual objects can be selected and/or purchased. Importing the objects from the store may include incorporating virtual representations of the objects in an artificial reality experience provided through the headset.

Input receiving module 422 may be configured to receive input regarding an object to be located and scanned in the area. The object to be located and scanned in the area may include a real-world object positioned within the area. Receiving the input regarding the object to be located and scanned in the area may include obtaining a user selection through the headset. The input regarding the object to be located and scanned in the area may include an identification of the object.

User providing module 424 may be configured to provide a prompt to a user to pick up and scan an object that is frequently used. By way of non-limiting example, the object that may be frequently used includes one or more of a real-world object that has been observed in regular use, a real-world object for which a user has indicated frequent use, or a real-world object that is a type of object that is predetermined to have frequent use.

Providing the prompt to the user may include presenting the prompt for viewing and/or listening through the headset. In some implementations, the prompt to the user may include a visual and/or audio alert.

In some implementations, computing platform(s) 402, remote platform(s) 404, and/or external resources 426 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which computing platform(s) 402, remote platform(s) 404, and/or external resources 426 may be operatively linked via some other communication media.

A given remote platform 404 may include one or more processors configured to execute computer program modules. The computer program modules may be configured to enable an expert or user associated with the given remote platform 404 to interface with system 400 and/or external resources 426, and/or provide other functionality attributed herein to remote platform(s) 404. By way of non-limiting example, a given remote platform 404 and/or a given computing platform 402 may include one or more of a server, a desktop computer, a laptop computer, a handheld computer, a tablet computing platform, a NetBook, a Smartphone, a gaming console, and/or other computing platforms.

External resources 426 may include sources of information outside of system 400, external entities participating with system 400, and/or other resources. In some implementations, some or all of the functionality attributed herein to external resources 426 may be provided by resources included in system 400.

Computing platform(s) 402 may include electronic storage 428, one or more processors 430, and/or other components. Computing platform(s) 402 may include communication lines, or ports to enable the exchange of information with a network and/or other computing platforms. Illustration of computing platform(s) 402 in FIG. 4 is not intended to be limiting. Computing platform(s) 402 may include a plurality of hardware, software, and/or firmware components operating together to provide the functionality attributed herein to computing platform(s) 402. For example, computing platform(s) 402 may be implemented by a cloud of computing platforms operating together as computing platform(s) 402.

Electronic storage 428 may comprise non-transitory storage media that electronically stores information. The electronic storage media of electronic storage 428 may include one or both of system storage that is provided integrally (i.e., substantially non-removable) with computing platform(s) 402 and/or removable storage that is removably connectable to computing platform(s) 402 via, for example, a port (e.g., a USB port, a firewire port, etc.) or a drive (e.g., a disk drive, etc.). Electronic storage 428 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 428 may include one or more virtual storage resources (e.g., cloud storage, a virtual private network, and/or other virtual storage resources). Electronic storage 428 may store software algorithms, information determined by processor(s) 430, information received from computing platform(s) 402, information received from remote platform(s) 404, and/or other information that enables computing platform(s) 402 to function as described herein.

Processor(s) 430 may be configured to provide information processing capabilities in computing platform(s) 402. As such, processor(s) 430 may include one or more of a digital processor, an analog processor, a digital circuit designed to process information, an analog circuit designed to process information, a state machine, and/or other mechanisms for electronically processing information. Although processor(s) 430 is shown in FIG. 4 as a single entity, this is for illustrative purposes only. In some implementations, processor(s) 430 may include a plurality of processing units. These processing units may be physically located within the same device, or processor(s) 430 may represent processing functionality of a plurality of devices operating in coordination. Processor(s) 430 may be configured to execute modules 408, 410, 412, 414, 416, 418, 420, 422, and/or 424, and/or other modules. Processor(s) 430 may be configured to execute modules 408, 410, 412, 414, 416, 418, 420, 422, and/or 424, and/or other modules by software; hardware; firmware; some combination of software, hardware, and/or firmware; and/or other mechanisms for configuring processing capabilities on processor(s) 430. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 408, 410, 412, 414, 416, 418, 420, 422, and/or 424 are illustrated in FIG. 4 as being implemented within a single processing unit, in implementations in which processor(s) 430 includes multiple processing units, one or more of modules 408, 410, 412, 414, 416, 418, 420, 422, and/or 424 may be implemented remotely from the other modules. The description of the functionality provided by the different modules 408, 410, 412, 414, 416, 418, 420, 422, and/or 424 described below is for illustrative purposes, and is not intended to be limiting, as any of modules 408, 410, 412, 414, 416, 418, 420, 422, and/or 424 may provide more or less functionality than is described. For example, one or more of modules 408, 410, 412, 414, 416, 418, 420, 422, and/or 424 may be eliminated, and some or all of its functionality may be provided by other ones of modules 408, 410, 412, 414, 416, 418, 420, 422, and/or 424. As another example, processor(s) 430 may be configured to execute one or more additional modules that may perform some or all of the functionality attributed below to one of modules 408, 410, 412, 414, 416, 418, 420, 422, and/or 424.

In particular embodiments, one or more objects (e.g., content or other types of objects) of a computing system may be associated with one or more privacy settings. The one or more objects may be stored on or otherwise associated with any suitable computing system or application, such as, for example, a social-networking system, a client system, a third-party system, a social-networking application, a messaging application, a photo-sharing application, or any other suitable computing system or application. Although the examples discussed herein are in the context of an online social network, these privacy settings may be applied to any other suitable computing system. Privacy settings (or "access settings") for an object may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the online social network. When privacy settings for an object allow a particular user or other entity to access that object, the object may be described as being "visible" with respect to that user or other entity. As an example and not by way of limitation, a user of the online social network may specify privacy settings for a user-profile page that identify a set of users that may access work-experience information on the user-profile page, thus excluding other users from accessing that information.

In particular embodiments, privacy settings for an object may specify a "blocked list" of users or other entities that should not be allowed to access certain information associated with the object. In particular embodiments, the blocked list may include third-party entities. The blocked list may specify one or more users or entities for which an object is not visible. As an example and not by way of limitation, a user may specify a set of users who may not access photo albums associated with the user, thus excluding those users from accessing the photo albums (while also possibly allowing certain users not within the specified set of users to access the photo albums). In particular embodiments, privacy settings may be associated with particular social-graph elements. Privacy settings of a social-graph element, such as a node or an edge, may specify how the social-graph element, information associated with the social-graph element, or objects associated with the social-graph element can be accessed using the online social network. As an example and not by way of limitation, a particular concept node corresponding to a particular photo may have a privacy setting specifying that the photo may be accessed only by users tagged in the photo and friends of the users tagged in the photo. In particular embodiments, privacy settings may allow users to opt in to or opt out of having their content, information, or actions stored/logged by the social-networking system or shared with other systems (e.g., a third-party system). Although this disclosure describes using particular privacy settings in a particular manner, this disclosure contemplates using any suitable privacy settings in any suitable manner.

In particular embodiments, privacy settings may be based on one or more nodes or edges of a social graph. A privacy setting may be specified for one or more edges or edge-types of the social graph, or with respect to one or more nodes, or node-types of the social graph. The privacy settings applied to a particular edge connecting two nodes may control whether the relationship between the two entities corresponding to the nodes is visible to other users of the online social network. Similarly, the privacy settings applied to a particular node may control whether the user or concept corresponding to the node is visible to other users of the online social network. As an example and not by way of limitation, a first user may share an object to the social-networking system. The object may be associated with a concept node connected to a user node of the first user by an edge. The first user may specify privacy settings that apply to a particular edge connecting to the concept node of the object, or may specify privacy settings that apply to all edges connecting to the concept node. As another example and not by way of limitation, the first user may share a set of objects of a particular object-type (e.g., a set of images). The first user may specify privacy settings with respect to all objects associated with the first user of that particular object-type as having a particular privacy setting (e.g., specifying that all images posted by the first user are visible only to friends of the first user and/or users tagged in the images).

In particular embodiments, the social-networking system may present a "privacy wizard" (e.g., within a webpage, a module, one or more dialog boxes, or any other suitable interface) to the first user to assist the first user in specifying one or more privacy settings. The privacy wizard may display instructions, suitable privacy-related information, current privacy settings, one or more input fields for accepting one or more inputs from the first user specifying a change or confirmation of privacy settings, or any suitable combination thereof. In particular embodiments, the social-networking system may offer a "dashboard" functionality to the first user that may display, to the first user, current privacy settings of the first user. The dashboard functionality may be displayed to the first user at any appropriate time (e.g., following an input from the first user summoning the dashboard functionality, following the occurrence of a particular event or trigger action). The dashboard functionality may allow the first user to modify one or more of the first user's current privacy settings at any time, in any suitable manner (e.g., redirecting the first user to the privacy wizard).

Privacy settings associated with an object may specify any suitable granularity of permitted access or denial of access. As an example and not by way of limitation, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of a particular university), all users ("public"), no users ("private"), users of third-party systems, particular applications (e.g., third-party applications, external websites), other suitable entities, or any suitable combination thereof. Although this disclosure describes particular granularities of permitted access or denial of access, this disclosure contemplates any suitable granularities of permitted access or denial of access.

In particular embodiments, one or more servers may be authorization/privacy servers for enforcing privacy settings. In response to a request from a user (or other entity) for a particular object stored in a data store, the social-networking system may send a request to the data store for the object. The request may identify the user associated with the request and the object may be sent only to the user (or a client system of the user) if the authorization server determines that the user is authorized to access the object based on the privacy settings associated with the object. If the requesting user is not authorized to access the object, the authorization server may prevent the requested object from being retrieved from the data store or may prevent the requested object from being sent to the user. In the search-query context, an object may be provided as a search result only if the querying user is authorized to access the object, e.g., if the privacy settings for the object allow it to be surfaced to, discovered by, or otherwise visible to the querying user. In particular embodiments, an object may represent content that is visible to a user through a newsfeed of the user. As an example and not by way of limitation, one or more objects may be visible to a user's "Trending" page. In particular embodiments, an object may correspond to a particular user. The object may be content associated with the particular user, or may be the particular user's account or information stored on the social-networking system, or other computing system. As an example and not by way of limitation, a first user may view one or more second users of an online social network through a "People You May Know" function of the online social network, or by viewing a list of friends of the first user. As an example and not by way of limitation, a first user may specify that they do not wish to see objects associated with a particular second user in their newsfeed or friends list. If the privacy settings for the object do not allow it to be surfaced to, discovered by, or visible to the user, the object may be excluded from the search results. Although this disclosure describes enforcing privacy settings in a particular manner, this disclosure contemplates enforcing privacy settings in any suitable manner.

In particular embodiments, different objects of the same type associated with a user may have different privacy settings. Different types of objects associated with a user may have different types of privacy settings. As an example and not by way of limitation, a first user may specify that the first user's status updates are public, but any images shared by the first user are visible only to the first user's friends on the online social network. As another example and not by way of limitation, a user may specify different privacy settings for different types of entities, such as individual users, friends-of-friends, followers, user groups, or corporate entities. As another example and not by way of limitation, a first user may specify a group of users that may view videos posted by the first user, while keeping the videos from being visible to the first user's employer. In particular embodiments, different privacy settings may be provided for different user groups or user demographics. As an example and not by way of limitation, a first user may specify that other users who attend the same university as the first user may view the first user's pictures, but that other users who are family members of the first user may not view those same pictures.

In particular embodiments, the social-networking system may provide one or more default privacy settings for each object of a particular object-type. A privacy setting for an object that is set to a default may be changed by a user associated with that object. As an example and not by way of limitation, all images posted by a first user may have a default privacy setting of being visible only to friends of the first user and, for a particular image, the first user may change the privacy setting for the image to be visible to friends and friends-of-friends.

In particular embodiments, privacy settings may allow a first user to specify (e.g., by opting out, by not opting in) whether the social-networking system may receive, collect, log, or store particular objects or information associated with the user for any purpose. In particular embodiments, privacy settings may allow the first user to specify whether particular applications or processes may access, store, or use particular objects or information associated with the user. The privacy settings may allow the first user to opt in or opt out of having objects or information accessed, stored, or used by specific applications or processes. The social-networking system may access such information in order to provide a particular function or service to the first user, without the social-networking system having access to that information for any other purposes. Before accessing, storing, or using such objects or information, the social-networking system may prompt the user to provide privacy settings specifying which applications or processes, if any, may access, store, or use the object or information prior to allowing any such action. As an example and not by way of limitation, a first user may transmit a message to a second user via an application related to the online social network (e.g., a messaging app), and may specify privacy settings that such messages should not be stored by the social-networking system.

In particular embodiments, a user may specify whether particular types of objects or information associated with the first user may be accessed, stored, or used by the social-networking system. As an example and not by way of limitation, the first user may specify that images sent by the first user through the social-networking system may not be stored by the social-networking system. As another example and not by way of limitation, a first user may specify that messages sent from the first user to a particular second user may not be stored by the social-networking system. As yet another example and not by way of limitation, a first user may specify that all objects sent via a particular application may be saved by the social-networking system.

In particular embodiments, privacy settings may allow a first user to specify whether particular objects or information associated with the first user may be accessed from particular client systems or third-party systems. The privacy settings may allow the first user to opt in or opt out of having objects or information accessed from a particular device (e.g., the phone book on a user's smart phone), from a particular application (e.g., a messaging app), or from a particular system (e.g., an email server). The social-networking system may provide default privacy settings with respect to each device, system, or application, and/or the first user may be prompted to specify a particular privacy setting for each context. As an example and not by way of limitation, the first user may utilize a location-services feature of the social-networking system to provide recommendations for restaurants or other places in proximity to the user. The first user's default privacy settings may specify that the social-networking system may use location information provided from a client device of the first user to provide the location-based services, but that the social-networking system may not store the location information of the first user or provide it to any third-party system. The first user may then update the privacy settings to allow location information to be used by a third-party image-sharing application in order to geo-tag photos.

In particular embodiments, privacy settings may allow a user to specify one or more geographic locations from which objects can be accessed. Access or denial of access to the objects may depend on the geographic location of a user who is attempting to access the objects. As an example and not by way of limitation, a user may share an object and specify that only users in the same city may access or view the object. As another example and not by way of limitation, a first user may share an object and specify that the object is visible to second users only while the first user is in a particular location. If the first user leaves the particular location, the object may no longer be visible to the second users. As another example and not by way of limitation, a first user may specify that an object is visible only to second users within a threshold distance from the first user. If the first user subsequently changes location, the original second users with access to the object may lose access, while a new group of second users may gain access as they come within the threshold distance of the first user.

In particular embodiments, changes to privacy settings may take effect retroactively, affecting the visibility of objects and content shared prior to the change. As an example and not by way of limitation, a first user may share a first image and specify that the first image is to be public to all other users. At a later time, the first user may specify that any images shared by the first user should be made visible only to a first user group. The social-networking system may determine that this privacy setting also applies to the first image and make the first image visible only to the first user group. In particular embodiments, the change in privacy settings may take effect only going forward. Continuing the example above, if the first user changes privacy settings and then shares a second image, the second image may be visible only to the first user group, but the first image may remain visible to all users. In particular embodiments, in response to a user action to change a privacy setting, the social-networking system may further prompt the user to indicate whether the user wants to apply the changes to the privacy setting retroactively. In particular embodiments, a user change to privacy settings may be a one-off change specific to one object. In particular embodiments, a user change to privacy may be a global change for all objects associated with the user.

In particular embodiments, the social-networking system may determine that a first user may want to change one or more privacy settings in response to a trigger action associated with the first user. The trigger action may be any suitable action on the online social network. As an example and not by way of limitation, a trigger action may be a change in the relationship between a first and second user of the online social network (e.g., "un-friending" a user, changing the relationship status between the users). In particular embodiments, upon determining that a trigger action has occurred, the social-networking system may prompt the first user to change the privacy settings regarding the visibility of objects associated with the first user. The prompt may redirect the first user to a workflow process for editing privacy settings with respect to one or more entities associated with the trigger action. The privacy settings associated with the first user may be changed only in response to an explicit input from the first user, and may not be changed without the approval of the first user. As an example and not by way of limitation, the workflow process may include providing the first user with the current privacy settings with respect to the second user or to a group of users (e.g., un-tagging the first user or second user from particular objects, changing the visibility of particular objects with respect to the second user or group of users), and receiving an indication from the first user to change the privacy settings based on any of the methods described herein, or to keep the existing privacy settings.

In particular embodiments, a user may need to provide verification of a privacy setting before allowing the user to perform particular actions on the online social network, or to provide verification before changing a particular privacy setting. When performing particular actions or changing a particular privacy setting, a prompt may be presented to the user to remind the user of his or her current privacy settings and to ask the user to verify the privacy settings with respect to the particular action. Furthermore, a user may need to provide confirmation, double-confirmation, authentication, or other suitable types of verification before proceeding with the particular action, and the action may not be complete until such verification is provided. As an example and not by way of limitation, a user's default privacy settings may indicate that a person's relationship status is visible to all users (i.e., "public"). However, if the user changes his or her relationship status, the social-networking system may determine that such action may be sensitive and may prompt the user to confirm that his or her relationship status should remain public before proceeding. As another example and not by way of limitation, a user's privacy settings may specify that the user's posts are visible only to friends of the user. However, if the user changes the privacy setting for his or her posts to being public, the social-networking system may prompt the user with a reminder of the user's current privacy settings of posts being visible only to friends, and a warning that this change will make all of the user's past posts visible to the public. The user may then be required to provide a second verification, input authentication credentials, or provide other types of verification before proceeding with the change in privacy settings. In particular embodiments, a user may need to provide verification of a privacy setting on a periodic basis. A prompt or reminder may be periodically sent to the user based either on time elapsed or a number of user actions. As an example and not by way of limitation, the social-networking system may send a reminder to the user to confirm his or her privacy settings every six months or after every ten photo posts. In particular embodiments, privacy settings may also allow users to control access to the objects or information on a per-request basis. As an example and not by way of limitation, the social-networking system may notify the user whenever a third-party system attempts to access information associated with the user, and require the user to provide verification that access should be allowed before proceeding.

The techniques described herein may be implemented as method(s) that are performed by physical computing device(s); as one or more non-transitory computer-readable storage media storing instructions which, when executed by computing device(s), cause performance of the method(s); or, as physical computing device(s) that are specially configured with a combination of hardware and software that causes performance of the method(s).

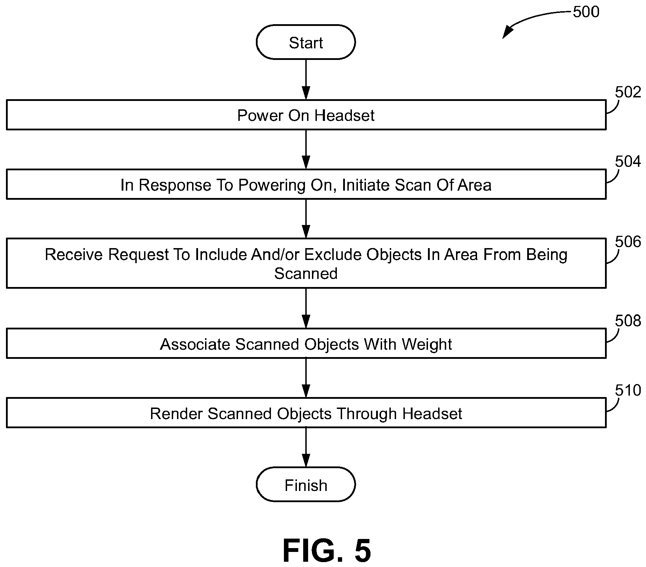

FIG. 5 illustrates an example flow diagram (e.g., process 500) for scanning and indexing, according to certain aspects of the disclosure. For explanatory purposes, the example process 500 is described herein with reference to FIGS. 1-4. Further for explanatory purposes, the steps of the example process 500 are described herein as occurring in serial, or linearly. However, multiple instances of the example process 500 may occur in parallel. For purposes of explanation of the subject technology, the process 500 will be discussed in reference to FIGS. 1-4.

At step 502, the process 500 may include powering on a headset. At step 504, the process 500 may include in response to the powering on, initiating a scan of an area. At step 506, the process 500 may include receiving a request to include and/or exclude objects in the area from being scanned. At step 508, the process 500 may include associating scanned objects with a weight. At step 510, the process 500 may include rendering the scanned objects through the headset.

For example, as described above in relation to FIG. 4, at step 502, the process 500 may include powering on a headset, through headset powering module 408. At step 504, the process 500 may include in response to the powering on, initiating a scan of an area, through scan initiation module 410. At step 506, the process 500 may include receiving a request to include and/or exclude objects in the area from being scanned, through request receiving module 412. At step 508, the process 500 may include associating scanned objects with a weight, through object associating module 414. At step 510, the process 500 may include rendering the scanned objects through the headset, through object rendition module 416.

According to an aspect, the area comprises a room or location.

According to an aspect, the process 500 may include indexing the scanned objects by the weight.

According to an aspect, the process 500 may include importing objects from a store.

According to an aspect, obtaining the scanned objects comprises a reverse-image search to identify an object.

According to an aspect, the process 500 may include receiving input regarding an object to be located and scanned in the area.

According to an aspect, the process 500 may include providing a prompt to a user to pick up and scan an object that is frequently used.

According to an aspect, the process 500 may include associating each scanned object with a non-fungible token identity.

According to an aspect, the headset includes a head-mounted display configured to provide artificial reality experiences.

According to an aspect, the area includes an environment proximate to the headset.

According to an aspect, the scan of the area includes a visual recording of the area.

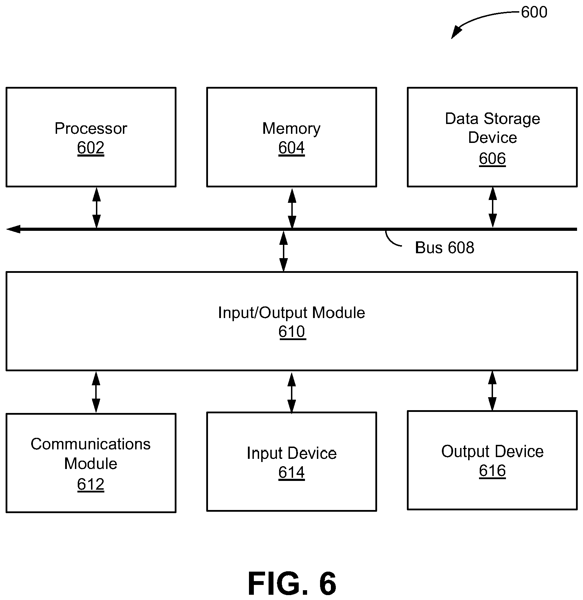

FIG. 6 is a block diagram illustrating an exemplary computer system 600 with which aspects of the subject technology can be implemented. In certain aspects, the computer system 600 may be implemented using hardware or a combination of software and hardware, either in a dedicated server, integrated into another entity, or distributed across multiple entities.

Computer system 600 (e.g., server and/or client) includes a bus 608 or other communication mechanism for communicating information, and a processor 602 coupled with bus 608 for processing information. By way of example, the computer system 600 may be implemented with one or more processors 602. Processor 602 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 600 can include, in addition to hardware, code that creates an execution environment for the computer program in question, e.g., code that constitutes processor firmware, a protocol stack, a database management system, an operating system, or a combination of one or more of them stored in an included memory 604, such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 608 for storing information and instructions to be executed by processor 602. The processor 602 and the memory 604 can be supplemented by, or incorporated in, special purpose logic circuitry.

The instructions may be stored in the memory 604 and implemented in one or more computer program products, i.e., one or more modules of computer program instructions encoded on a computer-readable medium for execution by, or to control the operation of, the computer system 600, and according to any method well-known to those of skill in the art, including, but not limited to, computer languages such as data-oriented languages (e.g., SQL, dBase), system languages (e.g., C, Objective-C, C++, Assembly), architectural languages (e.g., Java, .NET), and application languages (e.g., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 604 may also be used for storing temporary variable or other intermediate information during execution of instructions to be executed by processor 602.

A computer program as discussed herein does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 600 further includes a data storage device 606 such as a magnetic disk or optical disk, coupled to bus 608 for storing information and instructions. Computer system 600 may be coupled via input/output module 610 to various devices. The input/output module 610 can be any input/output module. Exemplary input/output modules 610 include data ports such as USB ports. The input/output module 610 is configured to connect to a communications module 612. Exemplary communications modules 612 include networking interface cards, such as Ethernet cards and modems. In certain aspects, the input/output module 610 is configured to connect to a plurality of devices, such as an input device 614 and/or an output device 616. Exemplary input devices 614 include a keyboard and a pointing device, e.g., a mouse or a trackball, by which a user can provide input to the computer system 600. Other kinds of input devices 614 can be used to provide for interaction with a user as well, such as a tactile input device, visual input device, audio input device, or brain-computer interface device. For example, feedback provided to the user can be any form of sensory feedback, e.g., visual feedback, auditory feedback, or tactile feedback, and input from the user can be received in any form, including acoustic, speech, tactile, or brain wave input. Exemplary output devices 616 include display devices such as an LCD (liquid crystal display) monitor, for displaying information to the user.

According to one aspect of the present disclosure, the above-described gaming systems can be implemented using a computer system 600 in response to processor 602 executing one or more sequences of one or more instructions contained in memory 604. Such instructions may be read into memory 604 from another machine-readable medium, such as data storage device 606. Execution of the sequences of instructions contained in the main memory 604 causes processor 602 to perform the process steps described herein. One or more processors in a multi-processing arrangement may also be employed to execute the sequences of instructions contained in memory 604. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, e.g., such as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 600 can include clients and servers. A client and server are generally remote from each other and typically interact through a communication network. The relationship of client and server arises by virtue of computer programs running on the respective computers and having a client-server relationship to each other. Computer system 600 can be, for example, and without limitation, a desktop computer, laptop computer, or tablet computer. Computer system 600 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 602 for execution. Such a medium may take many forms, including, but not limited to, non-volatile media, volatile media, and transmission media. Non-volatile media include, for example, optical or magnetic disks, such as data storage device 606. Volatile media include dynamic memory, such as memory 604. Transmission media include coaxial cables, copper wire, and fiber optics, including the wires that comprise bus 608. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter effecting a machine-readable propagated signal, or a combination of one or more of them.

As the user computing system 600 reads game data and provides a game, information may be read from the game data and stored in a memory device, such as the memory 604. Additionally, data from the memory 604 servers accessed via a network the bus 608, or the data storage 606 may be read and loaded into the memory 604. Although data is described as being found in the memory 604, it will be understood that data does not have to be stored in the memory 604 and may be stored in other memory accessible to the processor 602 or distributed among several media, such as the data storage 606.

As used herein, the phrase "at least one of' preceding a series of items, with the terms "and" or "or" to separate any of the items, modifies the list as a whole, rather than each member of the list (i.e., each item). The phrase "at least one of' does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the terms "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products. Other variations are within the scope of the following claims.

## Claims

1. A computer-implemented method for scanning and indexing, comprising:
powering on a headset;
in response to the powering on, initiating a scan of an area;
receiving a request to include and/or exclude objects in the area from being scanned;
associating scanned objects with a weight; and
rendering the scanned objects through the headset.

2. The method of claim 1, wherein the area comprises a room or location.

3. The method of claim 1 or claim 2, further comprising indexing the scanned objects by the weight.

4. The method of any preceding claim, wherein obtaining the scanned objects comprises a reverse-image search to identify an object.

5. The method of any preceding claim, further comprising importing objects from a store.

6. The method of any preceding claim, further comprising receiving input regarding an object to be located and scanned in the area.

7. The method of any preceding claim, further comprising providing a prompt to a user to pick up and scan an object that is frequently used; and optionally wherein the object that is frequently used includes one or more of a real-world object that has been observed in regular use, a real-world object for which a user has indicated frequent use, or a real-world object that is a type of object that is predetermined to have frequent use.

8. The method of any preceding claim, further comprising associating each scanned object with a non-fungible token identity.

9. The method of any preceding claim wherein the area includes an environment proximate to the headset.

10. A system configured for scanning and indexing, the system comprising:
one or more hardware processors configured by machine-readable instructions to:
power on a headset;
in response to the powering on, initiate a scan of an area, wherein the area comprises a room or location;
provide a prompt to a user to pick up and scan an object that is frequently used;
associate the scanned object with a non-fungible token identity; and
render the scanned object through the headset.

11. The system of claim 10, wherein the non-fungible token identity includes identification information stored in a blockchain.

12. The system of claim 10 or claim 11, wherein providing the prompt to the user includes presenting the prompt for viewing and/or listening through the headset.

13. The system of one of claims 10 to 13, wherein the one or more hardware processors are further configured by machine-readable instructions to perform the steps of any one of claims 4 to 7.

14. The method or system of any preceding claim, wherein the headset includes a head-mounted display configured to provide artificial reality experiences, and wherein the area includes an environment proximate to the headset.

15. A non-transient computer-readable storage medium having instructions embodied thereon, the instructions being executable by one or more processors to perform a method for scanning and indexing, the method comprising:
powering on a headset;
in response to the powering on, initiating a scan of an area, wherein the area includes an environment proximate to the headset;
receiving a request to include and/or exclude objects in the area from being scanned;
associating scanned objects with a weight;
indexing the scanned objects by the weight;
importing virtual representations of the scanned objects from a store based on the indexing; and
rendering the scanned objects through the headset, wherein rendering the scanned objects through the headset includes providing visual representations of the scanned objects that are viewable via the headset.
